(19) Europäisches Patentamt

European Patent Office

Office européen des brevets

(11) **EP 1 154 539 A1**

(12) **EUROPÄISCHE PATENTANMELDUNG**

(43) Veröffentlichungstag:
**14.11.2001  Patentblatt 2001/46**

(51) Int Cl.[7]: **H02H 3/33**

(21) Anmeldenummer: **00109908.4**

(22) Anmeldetag: **10.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **SIEMENS AKTIENGESELLSCHAFT 80333 München (DE)**

(72) Erfinder:
- **Kleemeier, Manfred, Dipl.-Ing. (FH) 93073 Neutraubling (DE)**
- **Schmid, Reinhard, Dipl.-Ing. (Uni) 93051 Regensburg (DE)**

(54) **Fehlerstromschutzschalter mit Summenstromwandler**

(57)  Fehlerstromschutzschalter, auch Differenzstromschutzschalter, der auf Wechselfehlerströme und auf pulsierende Fehlerströme mit Gleichstromkomponenten unter Einsatz eines Kondensators in Resonanzabstimmung anspricht, wozu das Kernmaterial des Summenstromwandlers bestimmten Parametern genügt. Es ist vorgesehen, dass

- bei Wechselstromerregung des Summenstromwandlers zu einer Feldstärke $H = 10 \frac{mA}{cm}$ die magnetische Induktion B wechsel $\geq 0,15$ T beträgt,
- dass bei Erregung mit Pulsstrom aus Einweggleichrichtung zu H im Bereich $10 \frac{mA}{cm} \leq H \leq 40 \frac{mA}{cm}$ ΔB stat, zwischen der maximalen Induktion bei Wechselstrom, B wechsel, und der statischen Remanenzinduktion, Br stat, der Beziehung genügt ΔB stat $\geq 0,85$ x B wechsel
- und dass bei Erregung mit Pulsstrom aus Doppelweggleichrichtung H im Bereich $10 \frac{mA}{cm} \leq H < 40 \frac{mA}{cm}$ ΔB dyn, zwischen der maximalen Induktion bei Wechselstrom, B wechsel, und der dynamischen Remanenzinduktion, Br dyn, der Beziehung genügt ΔB dyn $\geq 0,9$ x ΔB stat.

FIG 2

**Beschreibung**

Die Erfindung bezieht sich auf einen Fehlerstromschutzschalter, auch Differenzstromschutzschalter, der auf Wechselfehlerströme und auf pulsierende Fehlerströme mit Gleichstromkomponenten unter Einsatz eines Kondensators in Resonanzabstimmung anspricht. Derartige Fehlerstromschutzschalter sind bekannt (DE-C2-32 02 320).

Unter Fehlerstromschutzschalter versteht man einen netzspannungsunabhängigen Schutzschalter und unter Differenzstromschutzschalter einen netzspannungsabhängigen Schutzschalter, der zur Auslösung Netzspannung benötigt. Im englischen Sprachraum auch als RCD bezeichnet. Darüber hinaus bezeichnet man netzspannungsunabhängige Monitore zur Fehlerstromüberwachung als RCMs.

Zusammenfassend soll hier auch von Fehlerstromschutzeinrichtungen gesprochen werden. Nach IEC 60755 soll eine Fehlerstromschutzeinrichtung in der Ausführung AC Wechselstromfehlerströme erfassen und in der Ausführung A zusätzlich pulsierende Gleichfehlerströme.

Immer zahlreichere elektronische Betriebsmittel und anderweitige Schaltungen führen auf den Netzen zu immer komplizierteren Fehlerstromformen. So hat man bisher Fehlerstromschutzeinrichtungen für pulsierende Fehlerströme bereitgestellt, die dann ansprechen können, wenn zwischen den Stromimpulsen bezogen auf ihre Abszissenachse mindestens eine Lücke von etwa einer Halbwelle verbleibt. Anderenfalls waren Fehlerstromschutzeinrichtungen einzusetzen, die auf glatte Gleichfehlerströme ansprechen können. Das häufigere Auftreten von Fehlerstromformen, die zwischen den Stromimpulsen weniger als eine Halbwelle Zwischenraum aufweisen, erfordern bisher den Einsatz von RCDs des Typs B oder das Zusammenspiel zwischen zwei Auslöseprinzipien.

Der Erfindung liegt die Aufgabe zugrunde, eine Fehlerstromschutzeinrichtung zu entwickeln, die auf der Bauform beruht, die auf pulsierende Fehlerströme anspricht und diese so weiter zu entwickeln, dass auch Gleichstromkomponenten erfasst werden, die auf Pulsen beruhen, die zwischen den Stromimpulsen keine Lücke aufweisen.

Die Lösung der geschilderten Aufgabe erfolgt nach der Erfindung durch eine Fehlerstromschutzeinrichtung nach Anspruch 1. Das Kernmaterial des Summenstromwandlers genügt dabei den Parametern:

Dass bei Wechselstromerregung des Summenstromwandlers zu H = 10 $\frac{mA}{cm}$ B wechsel ≥ 0,15 T beträgt,
dass bei Erregung mit Pulsstrom aus Einweggleichrichtung zu H im Bereich 10 $\frac{mA}{cm}$ ≤ H ≤ 40 $\frac{mA}{cm}$,
ΔB stat, zwischen der maximalen Induktion bei Wechselstrom, B wechsel, und der statischen Resonanzinduktion, Br stat, der Beziehung genügt

ΔB stat ≥ 0,85 x B wechsel
und dass bei Erregung mit Pulsstrom aus Doppelweggleichrichtung zu H im Bereich 10 $\frac{mA}{cm}$ ≤ H ≤ 40 $\frac{mA}{cm}$
ΔB dyn, zwischen der maximalen Induktion bei Wechselstrom, B wechsel und der dynamischen Remanenzinduktion, Br dyn, der Beziehung genügt ΔB dyn ≥ 0,9 x ΔB stat.

Die angegebenen Größen, H, B, beziehen sich jeweils auf Spitzenwerte. Eine Fehlerstromschutzeinrichtung der geschilderten Art ermöglicht es, mit dem Auslöseprinzip für pulsierende Fehlerströme in herkömmlicher Bauweise durch in angegebener Weise abgestimmtes Wandlermaterial auch Fehlerströme zu erfassen, die zwischen den Stromimpulsen nur eine kleine oder keine Lücke aufweisen. Eine derartige Fehlerstromschutzeinrichtung ist wesentlich wirtschaftlicher als der Einsatz von zwei unterschiedlichen Fehlerstromschutzeinrichtungen, von denen die eine nach dem Prinzip der Auslösung bei pulsierenden Fehlerströmen und die andere nach dem Prinzip Auslösung bei glatten Gleichfehlerströmen arbeitet.

Die obere Auslösegrenze ist hierbei mit der Vorschrift konform, dass bei pulsierenden Fehlerströmen die Auslösung bei 1,4 x I$_{\triangle n}$ und zwischen der für glatten Gleichfehlerstrom, also 2,0 x I$_{\triangle n}$, liegen soll.

Vorteilhafterweise kann der Wandlerkern des Summenstromwandlers aus nanokristallinem Band bestehen, insbesondere kann er gewickelt sein. Dieses Wandlermaterial wird unter Rascherstarrung in einer anschließenden Wärmebehandlung auf gewünschte Parameter eingestellt.

Die Erfindung soll nun anhand von in der Zeichnung grob schematisch wiedergegebenen Ausführungsbeispielen näher erläutert werden:

In FIG 1 ist eine Fehlerstromschutzeinrichtung, in der Ausführung als Fehlerstromschutzschalter, veranschaulicht.
In FIG 2 ist ein Diagramm dargestellt, auf der Abszisse ist die Feldstärke und auf der Ordinate die magnetische Induktion des Materials des Kerns des Summenstromwandlers aufgetragen.
In FIG 3 ist eine Schaltung für ein Betriebsmittel veranschaulicht,
in FIG 4 die Stromform im Betriebsmittel und
in FIG 5 die Stromform, die im Fehlerfall einen Fehlerstrom aufweisen kann.
In FIG 6 ist ein weiteres Betriebsmittel veranschaulicht, in dem eine Stromform nach FIG 7 zu einer Fehlerstromform nach FIG 8 führen kann.

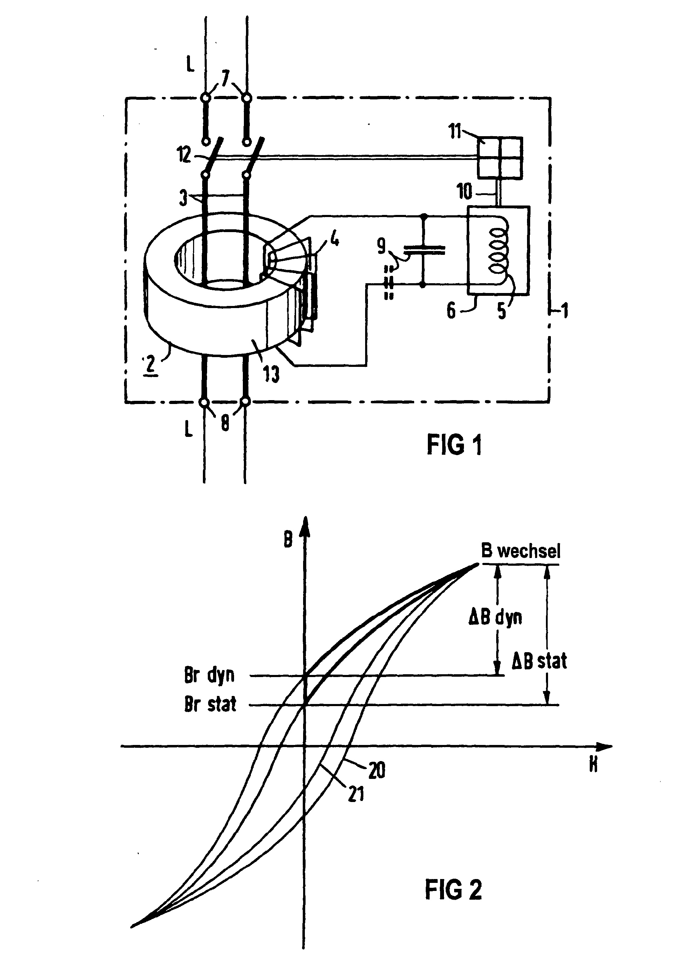

Die Fehlerstromschutzeinrichtung bzw. der Fehlerstromschutzschalter 1 nach FIG 1 besteht im wesentlichen aus dem Summenstromwandler 2 mit den durchgeführten zu überwachenden Leitern, die die Primärwicklung 3 darstellen, und der Sekundärwicklung 4, die mit der Auslösewicklung 5 des Auslösemagneten 6 verbunden ist. Der Auslösemagnet 6 kann ein Haltemagnet sein. Der zu überwachende Verbraucher und das Versorgungsnetz sind wahlweise an den Klemmen 7 oder 8 vorzustellen.

Zwischen der Sekundärwicklung 4 und der Auslösewicklung 5 ist ein Kondensator 9 eingeschaltet, der parallel oder in Reihe liegen kann. Der dadurch gebildete Schwingkreis ist auf die Frequenz der Spannung abgestimmt, die in der Sekundärwicklung 4 von einem in den Primärwicklungen 3 des Summenstromwandlers fließenden pulsierenden Gleichfehlerstrom induziert wird. Der Auslöser 6, beispielsweise ein Haltemagnet, wirkt über ein mechanisches Verbindungsteil 10 auf das Schaltschloss 11 ein. Wenn das Schaltschloss 11 entklinkt wird, werden die Schaltkontakte 12 geöffnet und der zu überwachende Verbraucher vom Netz abgeschaltet. Das Kernmaterial des Summenstromwandlers 2 ist auf die im Anspruch 1 wiedergegebenen Werte abgestimmt.

Die Größen für die Abstimmung sind in FIG 2 im Prinzip dargestellt, die der Anschaulichkeit wegen jedoch nicht den Beziehungen selbst entsprechen. Mit T ist die magnetische Induktion in der Einheit Tesla in den Formelbeziehungen bezeichnet. Die Abstimmung des Resonanzkreises kann in der inzwischen bekannten Weise erfolgen, wie es in DE-PS 20 36 497 geschildert ist. In FIG 2 ist auf der Abszisse die Feldstärke H und auf der Ordinate die magnetische Induktion B aufgetragen. Bei Wechselspannung durchläuft die Hysteresekurve die äußeren Linien bis zu B wechsel. Bei Erregung mit Pulsstrom aus Einweggleichrichtung wird ΔB stat von der statischen Remanenzinduktion, Br stat, zwischen der maximalen Induktion bei Wechselstrom, B wechsel, und der statischen Remanenzinduktion, Br stat, durchlaufen. Bei Erregung mit Pulsstrom aus Doppelweggleichrichtung wird die fett herausgehobene Linie durchlaufen, wobei ΔB dyn zwischen der maximalen Induktion bei Wechselstrom, B wechsel, und der dynamischen Remanenzinduktion, Br dyn, liegt.

Im Diagramm nach FIG 2 ist mit 20 die dynamische Hysteresisschleife und mit 21 die statische Hysteresisschleife bezeichnet.

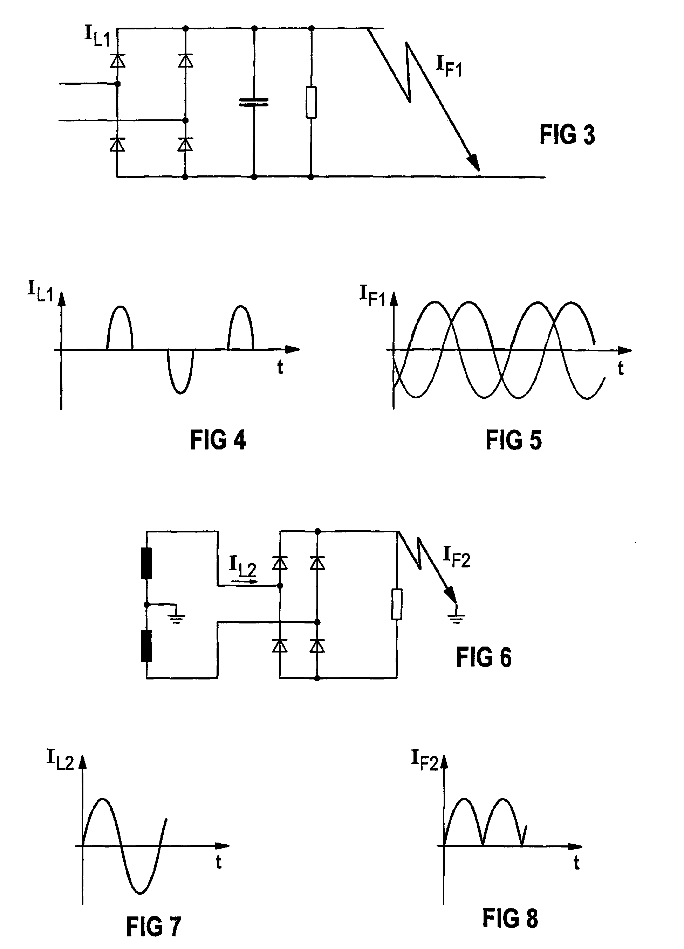

Betriebsmittel nach FIG 3 findet man in vielen Verbrauchernetzen, auch in Europa, insbesondere in den Beneluxstaaten. Sie führen bei einem Stromverlauf nach FIG 4 zu einem möglichen Fehlerstrom nach FIG 5. Betriebsmittel nach FIG 6 findet man besonders in Verbrauchernetzen in USA. Sie führen bei einem Stromverlauf nach FIG 7 im Betriebsmittel zu möglichen Fehlerströmen nach FIG 8. Betriebsmittel nach FIG 3 werden auch als Zweipuls-Brückenschaltung und Anschluss Leiter gegen Leiter bezeichnet. Betriebsmittel nach FIG 6 können als Zweipuls-Brückenschaltung bei Anschluss zwischen zwei Phasen und bei geerdetem Versorgungsmittelpunkt bezeichnet werden.

Das Kernmaterial des Summenstromwandlers 2 ist erfindungsgemäß auf die Werte nach Anspruch 1 abgestimmt, wodurch eine Auslösung bei Wechselstromerregung des Summenstromwandlers, bei Erregung mit Pulsstrom aus Einweggleichrichtung und bei Erregung mit Pulsstrom aus Doppelweggleichrichtung vorschriftengemäß erfolgt. Die gesonderte Abstimmung auf alle drei Stromformen wird durch die besonderen Parameter und ihre Beziehung erzielt. Man kann auch sagen, dass sich eine gesonderte Abstimmung durch die angegebenen Parameter und Beziehungen erübrigt.

Der Wandlerkern des Summenstromwandlers kann aus nanokristallinem Band gefertigt, insbesondere gewickelt sein. Unter nanokristallinem Material versteht man Kernmaterial, das einer Rascherstarrung unterzogen wird und anschließend wärmebehandelt wird.

Aufgrund langjähriger Erfahrungen ist es den Herstellern von Wandlerkernen möglich, das Material auf angegebene Beziehungen abzustimmen. Trotz der vielfältigen Literatur ist es jedoch schwierig, geeignete Beziehungen zu finden.

Nach dem geschilderten Aufbau können auch Ergänzungsblöcke konzipiert werden, sei es um Leitungsschutzschalter zu ertüchtigen, um auch bei Fehlerströmen auslösen zu können, sei es zur Ertüchtigung von herkömmlichen Fehlerstromschutzeinrichtungen. Nach dem Aufbauprinzip lassen sich auch Differenzstromschutzschalter herkömmlicher Art ertüchtigen. Man kann also entsprechend eine Erweiterung des Funktionsumfangs vornehmen, um pulsierende Fehlerstromformen ohne Lücke für eine Auslösung mit wirtschaftlichem Aufwand erfassen zu können.

**Patentansprüche**

1. Fehlerstromschutzschalter, auch Differenzstromschutzschalter, der auf Wechselfehlerströme und auf pulsierende Fehlerströme mit Gleichstromkomponenten unter Einsatz eines Kondensators in Resonanzabstimmung anspricht, wozu das Kernmaterial des Summenstromwandlers bestimmten Parametern genügt,
**dadurch gekennzeichnet,**

   - **dass** bei Wechselstromerregung des Summenstromwandlers zu einer Feldstärke H = 10 $\frac{mA}{cm}$ die magnetische Induktion B wechsel ≥ 0,15 T beträgt,
   - **dass** bei Erregung mit Pulsstrom aus Einweggleichrichtung zu H im Bereich 10 $\frac{mA}{cm}$ ≤ H ≤ 40 $\frac{mA}{cm}$ ΔB stat, zwischen der maximalen Induktion bei Wechselstrom, B wechsel, und der statischen Remanenzinduktion, Br stat, der Beziehung genügt ΔB stat ≥ 0,85 x B wechsel
   - und **dass** bei Erregung mit Pulsstrom aus Doppelweggleichrichtung H im Bereich 10 $\frac{mA}{cm}$ ≤ H ≤ 40 $\frac{mA}{cm}$ ΔB dyn, zwischen der maximalen Induktion bei Wechselstrom, B wechsel, und der dynamischen Remanenzinduktion, Br dyn, der Beziehung genügt $\Delta B$ dyn $\geq 0,9$ x $\Delta B$ stat.

2. Fehlerstromschutzschalter nach Anspruch 1, **dadurch gekennzeichnet,**
**dass** der Wandlerkern (13) des Summenstromwandlers (2) aus nanokristallinem Band gewickelt ist.

**FIG 1**

**FIG 2**

FIG 3

FIG 4

FIG 5

FIG 6

FIG 7

FIG 8

**Europäisches Patentamt**

## EUROPÄISCHER RECHERCHENBERICHT

Nummer der Anmeldung

EP 00 10 9908

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 392 204 A (VACUUMSCHMELZE GMBH) 17. Oktober 1990 (1990-10-17) * das ganze Dokument * ──── | 1,2 | H02H3/33 |
| X | EP 0 563 606 A (VACUUMSCHMELZE GMBH) 6. Oktober 1993 (1993-10-06) * das ganze Dokument * ──── | 1,2 | |
| A | EP 0 084 814 A (SIEMENS AG) 3. August 1983 (1983-08-03) * Zusammenfassung * | 1 | |
| D | & DE 32 02 320 A 28. Juli 1983 (1983-07-28) ──────── | | |

**RECHERCHIERTE SACHGEBIETE (Int.Cl.7)**

H02H
H01H

Der vorliegende Recherchenbericht wurde für alle Patentansprüche erstellt

| Recherchenort | Abschlußdatum der Recherche | Prüfer |
|---|---|---|
| DEN HAAG | 9. Oktober 2000 | Libberecht, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 00 10 9908

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-10-2000

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0392204 | A | 17-10-1990 | DE | 3911480 | A | 11-10-1990 |
| | | | AT | 145089 | T | 15-11-1996 |
| | | | DE | 59010553 | D | 12-12-1996 |
| | | | ES | 2094125 | T | 16-01-1997 |
| | | | JP | 2563097 | B | 11-12-1996 |
| | | | JP | 3201412 | A | 03-09-1991 |
| EP 0563606 | A | 06-10-1993 | DE | 4210748 | C | 16-12-1993 |
| | | | AT | 168496 | T | 15-08-1998 |
| | | | DE | 59308759 | D | 20-08-1998 |
| | | | ES | 2118844 | T | 01-10-1998 |
| EP 0084814 | A | 03-08-1983 | DE | 3202320 | A | 28-07-1983 |
| | | | AT | 12861 | T | 15-05-1985 |
| | | | DK | 26783 | A,B, | 27-07-1983 |
| | | | ES | 519278 | D | 16-02-1984 |
| | | | ES | 8402981 | A | 16-05-1984 |
| | | | JP | 1688000 | C | 11-08-1992 |
| | | | JP | 3053844 | B | 16-08-1991 |
| | | | JP | 58130722 | A | 04-08-1983 |
| | | | ZA | 8300477 | A | 26-10-1983 |

EPO FORM P0461

Für nähere Einzelheiten zu diesem Anhang : siehe Amtsblatt des Europäischen Patentamts, Nr.12/82